# EUROPEAN PATENT SPECIFICATION

(11) **EP 0 904 914 B1**
(45) Date of publication and mention of the grant of the patent: **14.09.2005**
(21) Application number: 98108066.6
(22) Date of filing: 04.05.1998
(51) Int. Cl.: B29C 43/38, B29C 37/00, B60R 13/04

(54) **Method for forming a molding**
Verfahren zur Herstellung eines Formteiles
Procédé pour le formage d'une pièce

(30) Priority: 25.09.1997 JP 27978097
(43) Date of publication of application: 31.03.1999
(73) Proprietor: INOAC CORPORATION, Aichi-ken (JP)
(72) Inventor: Sugiura, Masatoshi, c/o Inoac Corporation, Anjo-shi, Aichi (JP); Inoue, Koji, c/o Inoac Corporation, Anjo-shi, Aichi (JP); Muraguchi, Koichi, c/o Inoac Corporation, Anjo-shi, Aichi (JP)
(74) Representative: Füchsle, Klaus

(56) References cited:
- DE-A- 3 802 396
- FR-A- 2 503 023
- PATENT ABSTRACTS OF JAPAN vol. 1997, no. 03, 31 March 1997 (1997-03-31) -& JP 08 300473 A (INOAC CORP), 19 November 1996 (1996-11-19)
- PATENT ABSTRACTS OF JAPAN vol. 1996, no. 12, 26 December 1996 (1996-12-26) -& JP 08 216265 A (INOAC CORP), 27 August 1996 (1996-08-27)
- PATENT ABSTRACTS OF JAPAN vol. 018, no. 538 (M-1686), 13 October 1994 (1994-10-13) -& JP 06 190619 A (IWAI TANGATA SEISAKUSHO:YUGEN), 12 July 1994 (1994-07-12)

## Description

### BACKGROUND OF THE INVENTION

### 1. Field of the Invention

The present invention relates to a method for forming a molding having a shape changing area at a predetermined position.

### 2. Description of the Related Art

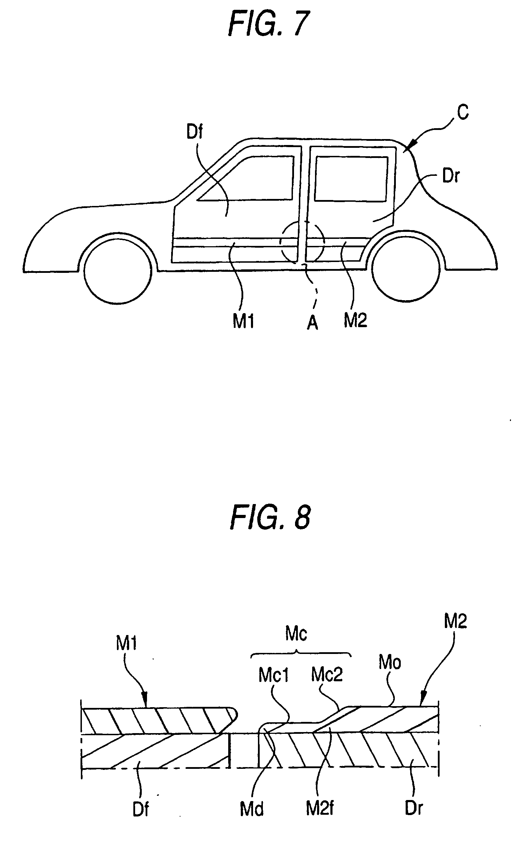

For example, as shown in Fig. 7, for the purpose of decoration, door protection, etc., strip-belt moldings M1 and M2 of plastic are attached to the area of doors Df and Dr on the side of a motor vehicle C in a longitudinal direction of a body.

The end of each of the above moldings M1 and M2 has a predetermined shape in order to prevent interference between the ends in door opening/closing or from the standpoint of design. As seen from Fig. 8 showing a section of the area designated by symbol A in Fig. 7, the front end M2f of the rear molding M2 is formed in a "rear-cut shape" in which it extends from a shape changing area Mc composed of an end side thin area Mc1 and a thickness gradually changing area Mc2 to a common area Mo. This intends to avoid the interference between the molding M2 and a front door Df or the rear portion of the front molding M1 when a rear door Dr is opened.

As the case may be, the shape changing area Mc may be provided in the other area than the end portion. The molding used in the other application field than the motor vehicle also may also require a shape changing area in which a designing side is recessed to a rear side to form a required thin shape.

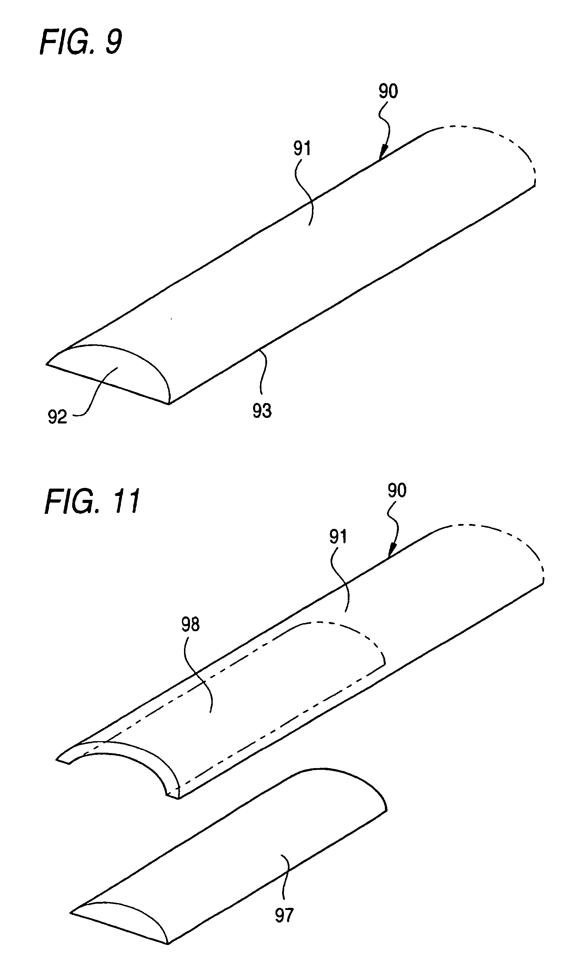

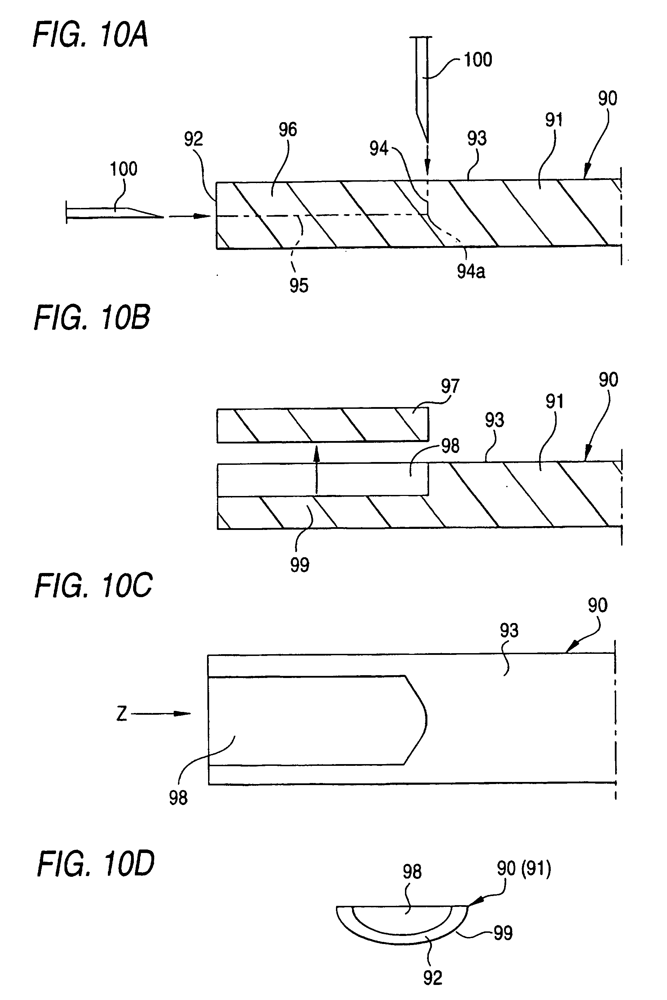

One of conventional methods of forming a molding having the shape changing area is a thermal stamping. First, as shown in Fig. 10A, for an extruded strip 90 having a predetermined size molded so as to conform to a desired molding as shown in Fig. 9, using an edged tool, a cutting line 94 is made in the bottom face 62 extending over a predetermined distance from the end face 92 of an end portion 91 in a thickness direction perpendicular to the bottom face 93, and using another edged tool 100, a cutting line 95 is made in parallel to the bottom face 93 of the end portion 91 from the end face thereof so as to reach an internal end of the cutting line 63a in the thickness direction. The bottom face area 96 sectioned by the parting lines 94 and 95 in both directions as shown in Figs. 10A and 10B is removed. This is a bottom face removal step.

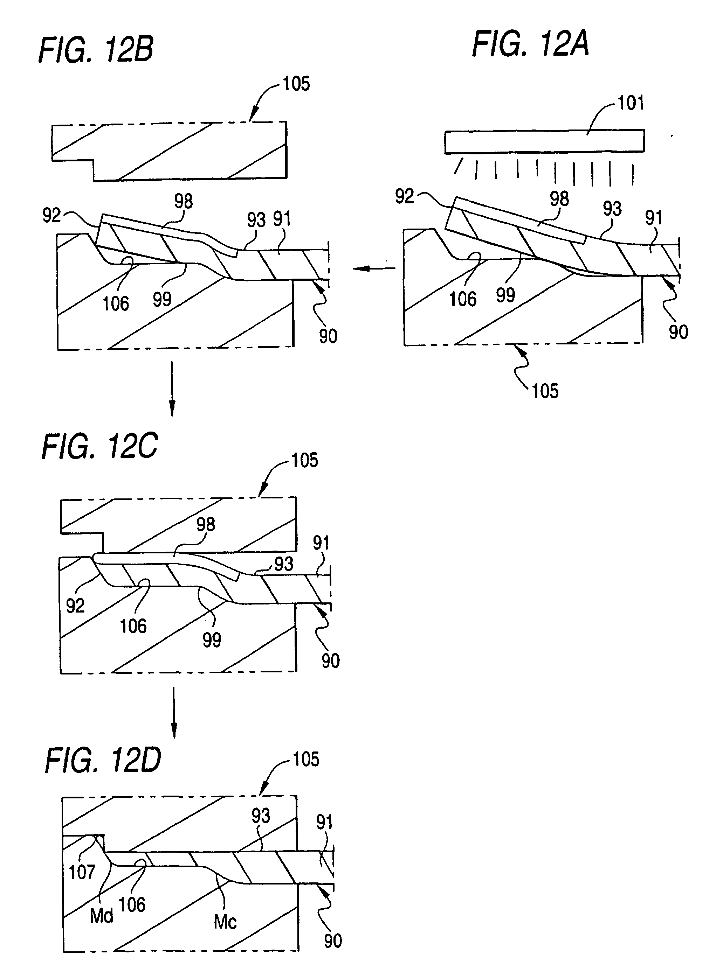

Fig. 10C is a plan view showing the bottom face 93 of the extruded strip 90 shown in Figs. 10B. Fig. 10D is a side view viewed from arrow Z in Fig. 10C. Fig. 11 is a perspective view of the extruded strip 90 with the bottom face thus removed. Reference numeral 97 denotes a removed unnecessary portion, and reference numeral 98 denotes a recessed bottom face removal area formed by removal.

As shown in Figs. 12A to 12D, a heating/softening step is performed which heats/softens the bottom face removal portion 98 formed in the extruded strip 90 using a heating device 101 such as a heater, and a stamping step is performed which stamps the extruded strip 90 by a stamping die 105 with a die face 106 having a desired molding end portion shape to push a show face side of the end portion 91 to the bottom face removal portion side so that the end portion is shaped into the die shape. Thus, a molding having a desired end portion shape is shaped. Incidentially, the space accommodating burrs is located outside position set with extruded strip within the stamping die to accommodate the burrs in pressing the extruded strip.

Meanwhile, the above conventional molding technique removes the bottom face area which is sectioned by a cutting face perpendicular to the bottom face of the extruded strip and another cutting face in parallel to the bottom face. Therefore, as shown in Fig. 11, the bottom face removal portion 98 after an unnecessary portion 97 has been removed is always a hollow having a shape substantially in parallel to the longitudinal direction of the extruded strip. On the other hand, the shape of the shape changing area after molding is uncertain since it has different shapes according to a required function and decoration. For example, the end portion of a molding M2 for a motor vehicle shown in Fig. 8 includes a gradually changing area Mc2 whose thickness becomes gradually thin and show face is inclined, and a constant thin area whose thickness remains substantially thin. The tip of the end portion is a chamfered area Md.

In this way, the conventional molding technique removes the bottom face in a predetermined shape and thickness (depth) by both cutting lines in perpendicular and parallel directions to the bottom face of the extruded strip. Therefore, the shape of the bottom face removal portion did not conform to that of the objective shape changing area of the molding. As a result, in the stamping step after heating/softening, when the resin on the show face side is pushed toward the bottom face removal portion for its shaping, the shape is changed forcibly. This gives rise to inconveniences such as difficulty of being shaped into a prescribed shape, generation of unequal stress to give a distortion to the shape changing area of the resultant molding, abundance of resin on the designing side pushed to the bottom face removal portion to produce of high amounts of burrs, etc.

The device used in the above bottom face removal apparatus includes a vertical edged tool which moves perpendicularly to the bottom face of the extruded strip held on a stand and horizontal edged tool which moves in parallel to the bottom face of the extruded strip. Therefore, the above vertical and horizontal edged tools could not freely remove the bottom face of the extruded strip. Accordingly, it was difficult to cause the bottom face removal portion to conform to the shape changing portion.

JP 08300473 A refers to a method of forming a molding with a shape changing area at a predetermined portion of a extruded strip. The method comprises a bottom face removal step, a heating/softening step and a stamping step. In the bottom face removal step predetermined portion of the extruded strip is removed. The bottom face area which is removed from the extruded strip has a cutting face perpendicular to the bottom face of the extruded strip. The shape of the bottom face removal portion does not correspond to that of the molding die and the finished extruded strip.

### SUMMARY OF THE INVENTION

The present invention has been accomplished under the above circumstance, and intends to provide a method and apparatus for forming a molding which is excellent in appearance of the shape changing portion, difficult to give a distortion to a shape changing portion, and further capable of reducing the generated amount of burrs.

To achieve the above object, there is provided a method for forming a molding with a shape changing area at a predetermined portion of an extruded strip comprising the features of claim 1.

Preferably, in said bottom face removal step, a rotary cutting blade is moved three-dimensionally while it is put on the bottom face of the predetermined portion of the extruded strip to remove bottom face to have a shape and depth corresponding to the shape of the shape changing area.

The above and other objects and features of the present invention will be more apparent from the following description taken in conjunction with the accompanying drawings.

### BRIEF DESCRIPTION OF THE DRAWINGS

In the drawings:
Fig 1 is a side view showing a molding device according to one explanatory embodiment;
Fig. 2 is a perspective view showing a main portion of the molding device shown in Fig. 1;
Figs. 3A and 3B are partial sectional views showing an example of a bottom face removal step using the molding apparatus shown in Fig. 1;
Fig. 4 is a sectional view showing an extruded strip obtained by a bottom face removal step in Fig. 3;
Fig. 5 is a sectional view showing the heating/softening in a molding method according to an embodiment of the present invention.
Fig. 6 is a sectional view showing a stamping step in the embodiment;
Fig. 7 is a side view of an motor vehicle with a molding;
Fig. 8 is an enlarged sectional view of an area A in Fig. 7;
Fig. 9 is a perspective view showing an end portion of an extruded strip;
Figs. 10A to 10D are schematic views showing a conventional bottom face removal step;
Fig. 11 is a perspective view showing the end portion of an extruded strip in the conventional bottom face removal step; and
Figs. 12A to 12D are sectional views showing a heating/softening step and a stamping step according to the prior art.

### DETAILED DESCRIPTION OF THE PREFERRED EMBODIMENTS

Now referring to the drawings, an explanation will be given of the present invention.

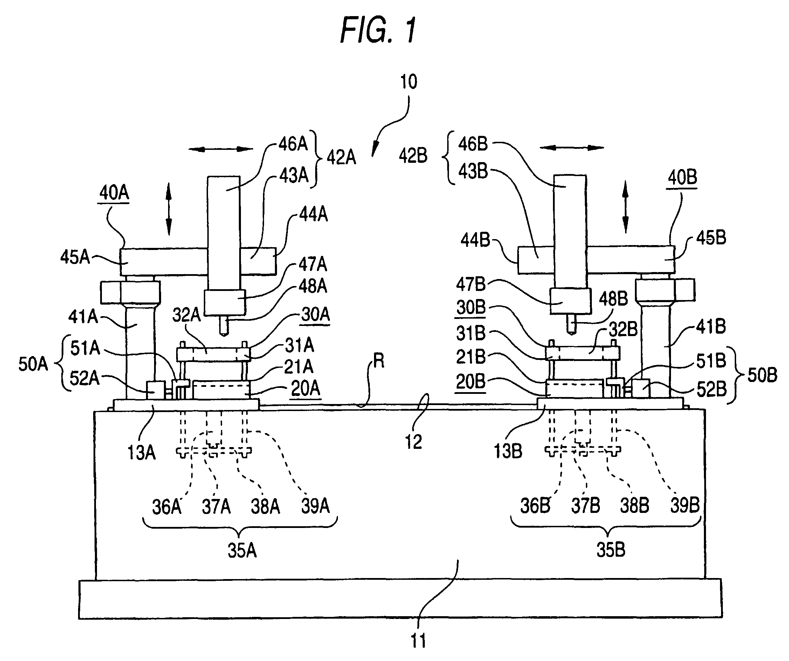

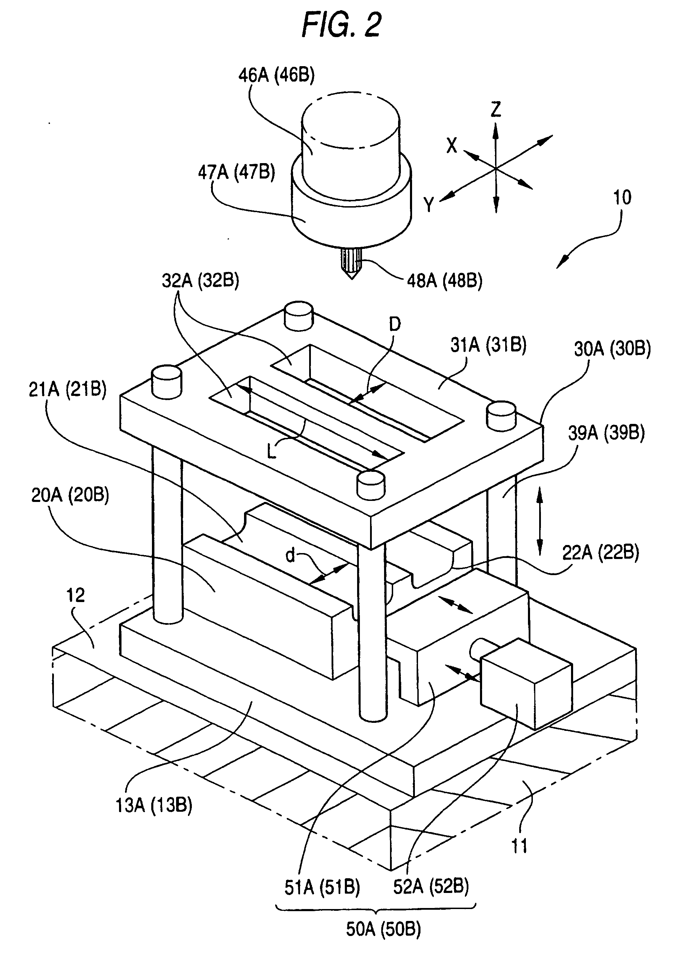

An explanation will be given of a molding device suitable for performing the below-described method. A molding device 10 according to an embodiment of the present invention as shown in Figs. 1 and 2 is used for a bottom face removal step when a molding having a shape changing area at its end portion is thermally stamped from an extruded strip.

The molding device 10 is provided with receiving sections 20A, 20B; pressing/securing means 30A, 30B; and rotating/cutting means 40A, 40B on a stand 11. The stand 11 serves to hold the respective components of the molding device such as the receiving sections 20A, 20B, and has a box shape with a prescribed height in this embodiment. On an upper surface 12 of the stand 11, two attaching plates 13A, 13B are located apart by a prescribed distance from each other. The one attaching plate 13B is attached on a rail R arranged on the upper surface of the stand 11 so that it can move from and to the other attaching plate 13A. The movement of the one attaching plate 13B permits its distance from the other attaching plate 13A to vary. Additionally, the attaching plate 13B can move forward and backward in such a manner that a cylinder device (not shown) is attached to the stand 11 so that its operating member is in parallel to the direction between both attaching plates 13A, 13B and the tip of the operating member is secured to the attaching plate 13B.

The receiving sections 20A and 20B serve to support the end portion of an extruded strip continuously extruded to have a prescribed length, i.e. a portion constituting a shape changing area so that its bottom face is oriented upward. In this embodiment, the receiving section 20A (20B) has, on the upper surface of a substantial rectangular solid, a concave groove 21A (21B) is formed which has a sectional shape conforming to that on the designing side of the extruded strip. These receiving sections 20A, 20B are attached to the attaching plates 13A, 13B, respectively so that the concave grooves 21A, 21B are linear. In this embodiment, two grooves, i.e. the above concave grooves 21A and 21B are formed in parallel on the corresponding receiving sections 20A and 20B so that those for the left and right doors of a motor vehicle can be simultaneously machined.

The pressing/securing means 30A (30B) serves to press the bottom face of the end portion of the extruded strip arranged on the concave groove 21A (21B) of the receiving section 20A (20B) to secure the end portion of the extruded strip. The pressing/securing means 30A (30B) includes a pressing plate 31A (31B) located above the receiving section 20A (20B) and a vertical movement device 35A (35B) for supporting the pressing plate 31A (31B) so as to be vertically movable over the receiving section 20A (20B).

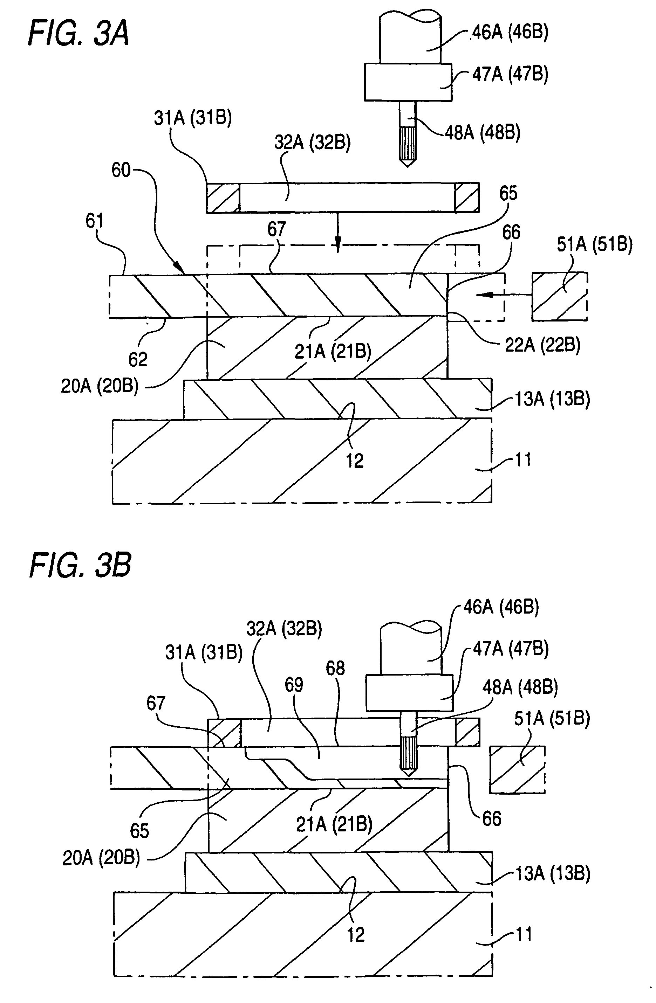

The pressing/securing plate 31A (31B) is shaped in a planar shape having a larger than the receiving section 20A (20B). The pressing/securing plate 31A (31B) has a rectangular opening 32A (32B) corresponding to the concave groove 21A (21B) of the receiving section 20A (20B). The opening 32A (32B) has a width D which is smaller than the width d of the convex groove 21A (21B) of the receiving section 20A (20B) (size in a direction orthogonal to the longitudinal direction) so that the edges in the width direction of the bottom face of the extruded strip arranged in the concave groove 21A (21B) can be pressed. The length L of the opening 32A (32B) is determined so that the end portion 65 of the extruded strip 60 is located within the opening 32A (32B) so that a cutting blade 48A (48B) which is to be inserted into the opening 32A (32B) from above can cut an end tip 66 of the extruded strip 60 (Figs. 3A and 3B).

The vertical movement device 35A (35B) includes a cylinder device 36A (36B) with an operating member 37A (37B) oriented downward on the bottom face of the attaching plate 13A, a rectangular plate 38A (38B) attached to the lower end of the operating member 37A (37B) and coupling rods 39A (39B) which are attached upward at four corners of the plate 38A (38B) to penetrate through the upper surface of the stand 11 and pass outside the four corners of the receiving section 20A (20B) to extend upwards. The pressing plate 31A (31B) is secured to the upper ends of the coupling rods 39A (39B), and is adapted to move from and to the receiving section 20A (20B) by the rise/fall of the operating member 37A (37B) of the cylinder device 36A (36B).

A rotary cutting means 40A (40B) serves to machine the bottom face of the end portion of the extruded strip arranged in the concave groove 21A (21B) of the receiving section 20A (20B) so that the bottom face has a planar shape and depth conforming to the shape changing portion of a molding. The rotary cutting means 40A (40B) includes a pillar-shaped supporting member 41A secured to the attaching plate 13A (13B), a movable member 42A (42B) attached to the supporting member 41A and a rotary cutting blade driving member 47A (47B). One of the two rotary cutting means 40A (40B) serves to cut the bottom face of one end portion of one of two extruded strips arranged in parallel on the receiving section 20A (20B), whereas the other of the rotary cutting means 40A (40B) serves to cut the one end portion of another extruded strip on the opposite side to the one end portion of the above one extruded strip.

The movable member 42A (42B), which is called "three-axis robot", serves to move the rotary cutting blade driving member 47A (47B) for the bottom face of the end portion of the extruded strip arranged on the receiving section 20A (20B) by a desired degree three-dimensionally in orthogonal three axial directions (i.e. X-, Y- and Z-directions in Fig. 2) in accordance with the shape changing portion of the molding. In this embodiment, the movable member 42A (42B) includes a first movable component 43A (43B), which is arm-shaped, attached to the upper end of the supporting member 41A (41B) so as to be in parallel to the upper face of the supporting member 41A (41B) and is rotatable by a desired angle on the supporting member 41A (41B), and a second movable member 46A (46B), which is pillar-shaped and attached to the first movable member 43A (43B) so as to be movable by a desired distance between the tip 44A (44B) and stem 45A (45B) of the first movable member 43A (43B) in a horizontal direction and movable by a desired distance in a vertical direction. The rotation, horizontal movement and vertical movement of the movable member 42A (42B) are carried out by a driving motor (not shown), and its movable amount is controlled by a known electrical control means in accordance with a program previously determined correspondingly to the shape changing area of the molding.

The rotary cutting blade driving member 47A (47B) includes a driving motor (not shown) for rotating a rotary shaft oriented downward (not shown) and a rotary cutting blade 48A (48B) attached to the rotary shaft, and serves to machine (cut/remove) the bottom face of the end portion of the extruded strip arranged on the receiving section 20A (20B) by its three-dimensional movement by the movable member 42A (42B) so that the bottom face has a planar shape and depth conforming to the shape changing portion of the molding. The rotary cutting blade 48A (48B), which is equipped with blades on the side and bottom of its shaft, may be a ball-end mill, or flat end mill which is simply called "end mill". In order to perform the cutting at high precision, the ball-end mill is preferably used as the rotary cutting blade 48A (48B).

In this embodiment, a positioning means 50 for positioning the tip of the end portion of the extruded strip is provided on the attaching plate 13A (13B). The positioning means 50A (50B) includes a tapping member 51A (51B) which moves from and to the outer end 22A (22B) of the concave groove 21A (21B) of the receiving section 20A (20B) and a cylinder device 52A (52B) for moving the tapping member 51A (51B). The extruded strip is positioned in such a manner that it is arranged on the receiving section 20A (20B) while the tip of its end portion is caused to put on the tapping member 51A moved forward to a prescribed position. After the extruded strip has been positioned and secured by the pressing plate 31A (31B) of the pressing/securing means 30A, the tapping member 51A (51B) is left from the outer end of the receiving section 20A (20B) so that the cutting of the tip of the end portion of the extruded strip is not obstructed by the tapping member 51A (51B).

As described above, since the receiving section 20A (20B), pressing/securing means 30A (30B) and rotary cutting means 40A (40B) are provided on the attaching plate 13A (13B), the one attaching plate 13B is moved forward and backward on the rail R to adjust its distance from the other attaching plate 13A so that the interval between the receiving sections 20A and 20B and between others can be optimally set. The molding apparatus can be operated by an operating section which is electrically connected to the respective members described above and arranged on the stand 11.

An explanation will be given of an embodiment of a method for forming a molding according to the present invention. The method for forming a molding according to the present invention uses a thermal stamping used conventionally, and comprises a bottom face removal step, a heating/softening step and a stamping step.

In the bottom face removal step, first, an extruded strip 60 of plastic such as vinyl chloride resin is prepared which is continuously extruded in accordance with a desired molding shape and cut in a prescribed length. The extruded strip 60 is similar to the extruded strip 90 shown in Fig. 9 in connection with the description of the prior art. As shown in Fig. 3A, with the bottom face 61 oriented upward and the show face 62 oriented downward, the end portion 65 of the extruded strip 60 is arranged in the concave groove 21A (21B) of the receiving section 20A (20B) of the molding apparatus 10. Prior to its arranging, in accordance with the length of the extruded strip 60 to be used, the one attaching plate 13B moves forward or backward by the operation of the cylinder device to shift the receiving section 20A (20B), pressing/securing means 30A (30B), rotary cutting means 40A (40B) and positioning means 50A (50B) are moved to right positions for the length of the extruded strip so that the end portion 65 of the extruded strip 60 can be rightly arranged in the concave groove 21A (21B) of the receiving section 20A (20B). The abutting member 51A (51B) of the positioning means 50A (50B), which has moved toward the outer end 22A (22B) of the concave groove 21A (21B), abuts on the end face 66 of the extruded strip 60 to position the extruded strip 60 rightly.

The pressing plate 31A (31B) of the pressing/securing means 30A (30B) is lowered to press the bottom face 67 of the end portion 65 of the extruded strip 60 on the receiving section 20A (20B) downward so that the extruded strip is secured to the receiving section 20A (20B). At this time, in the opening 32A (32B) of the pressing plate 31A (31B), the bottom face 67 of the end portion 65 of the extruded strip 60 is exposed. As shown in Fig. 3B, the securing member 51A (51B) of the positioning means 50A (50B) retracts from the end face 66 of the extruded strip 60. The rotary cutting blade 48A (48B) of the rotary cutting means 40A (40B) is lowered into the opening 32A (32B) of the pressing plate 31A (31B) by the operation of the second movable component 46A (46B) so as to cut/remove the bottom face 67 of the end portion 65 of the extruded strip in the opening 32A (32B) while it moves three-dimensionally in accordance with a program prepared so as to correspond to a desired shape changing area, i.e. end shape of the molding. In this case, the cutting/removal of the bottom face of the extruded strip corresponding to the shape changing area of the molding is to not only cut/remove the area corresponding to the shape changing area having a large or small thickness by a shallow or a deep degree, but also cut/remove the shape changing area in accordance with its planar shape.

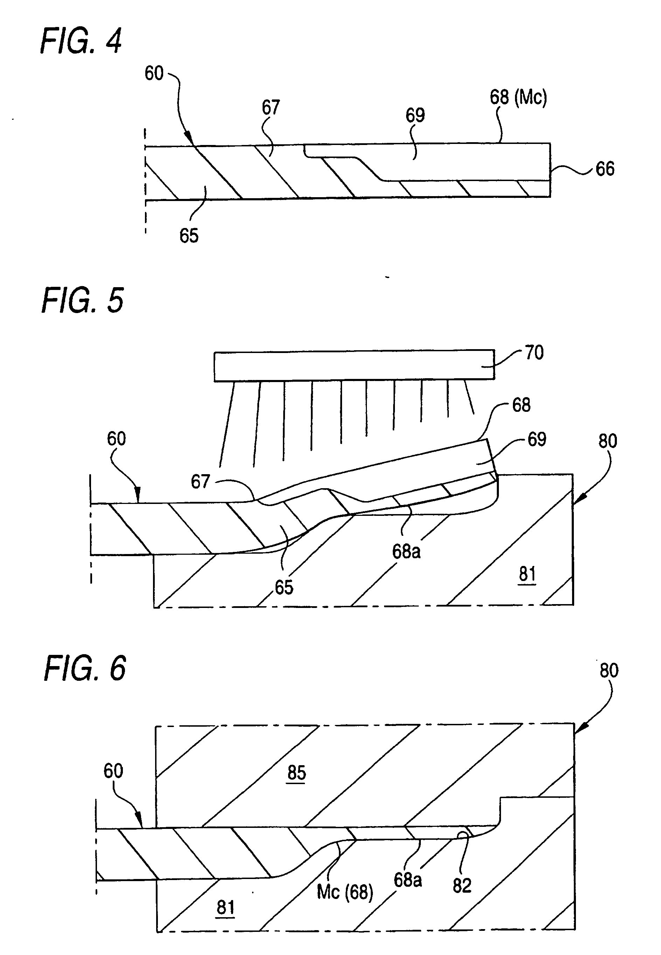

After the bottom face 67 of the end portion 65 of the extruded strip 60 has been cut and removed in a prescribed shape, the rotary cutting blade 48A (48B) and the pressing plate 31A (31B) are successively elevated so that the extruded strip after the bottom face removal is detached from the receiving section 20A (20B) of the molding apparatus 10. Thus, the extruded strip with the bottom face removal area 68 formed as shown in Fig. 4 is formed.

In the subsequent heating/softening step, the bottom face removal area of the extruded strip 60 acquired by the bottom face removal step is heated by a heating means such as a heater as shown in Fig. 5 so that it is softened. The heating temperature at this time is a temperature enough to deform the vicinity of the bottom face removal area 68 of the extruded strip 60 by stamping. It differs according to a material, heating time, etc. of the extruded strip. In this embodiment where the extruded strip 60 is made of vinyl chloride, the temperature of the heating means 70, although it depends on a heating source, is set at about 300 °C in the case of hot air blow. The heating/softening step can be carried out on a heating jig (not shown). However, it can be efficiently carried out as in this embodiment in such a fashion that the end portion 65 of the extruded strip 60 is arranged in a receiving die 81 of a stamping die 80 used in the subsequent stamping step with the bottom face 67 oriented toward the heating means 70.

In the subsequent stamping step, the bottom face removal area 68 of the extruded strip 60 after the above heating/softening step is stamped by the stamping die 80 as shown in Fig. 6 and shaped in a desired shape changing area (end area).

The stamping die 80 conforms to the shape of the shape changing area (end area) of the molding. It includes a receiving die 81 having a die face 82 on which the show face 68 of the bottom face removal area of the extruded strip 60 is arranged, and also a pressing die 85 for pressing the bottom face of the extruded strip 60. The pressing die 85 can be risen or fallen for the receiving die 81 by a known stamping apparatus (not shown).

In the stamping step, the bottom face removal area 68 of the extruded strip 60 in a softened state, whose bottom face has been removed in a shape and depth corresponding to the objective shape changing area of the molding, the resin on the side of the show face 68a moves smoothly into the space (the area designated by numeral 69 in Fig. 5) cut in the bottom face removal area 68 so that it is shaped in a shape of the die face 82, thus producing the objective shape changing area Mc with a good appearance. In addition, the forcible movement of resin is reduced so that unequal stress such as sharing stress is not stored in the shape changing area Mc, thereby making it to generate distortion in the resultant shape changing area Mc difficult. Further, the resin overflowing from the space 69 cut in the bottom face removal area 68 is reduced so that minor amounts of burrs is generated, thus making the subsequent work of removing the burrs easy.

Thereafter, by releasing the stamping, a desired molding having the shape changing area Mc with a good appearance at its end portion can be obtained. In the above explanation, the shape changing area has been formed at the end portion of the molding. However, the molding method and apparatus according to the present invention is not limited to the case where the shape changing are is formed at the end portion. This can be easily understood from the description hitherto made and can be put into practice in some modifications as necessity requires.

As illustrated and described above, the method of forming a molding according to the present invention, when a molding having a shape changing area at a desired position is formed from an extruded strip by thermal stamping, performs the bottom face removal step by cutting the bottom face of the extruded strip in a planar shape and depth corresponding to the shape changing area. For this reason, in the stamping step after the heating/softening step, the bottom face removal portion can be shaped easily and precisely in a desired shape changing area. In addition, unequal stress due to forcible movement and deformation of the resin is difficult to occur so that deformation of the shape changing area due to the stress can be suppressed, thereby permitting the molding with a good appearance to be provided. Further, the amount of burrs due to redundant resin which will be produced in the stamping step after the heating/softening can be reduced. This simplifies the work of removing the burrs.

The molding apparatus described above, unlike moving an edged tool perpendicularly and in parallel to the bottom face of the extruded strip according to the prior art, moves a rotary cutting blade called "end mill" three-dimensionally for the bottom face of the extruded strip. For this reason, in the bottom face removal step when the molding having a shape changing area at a desired position is formed from the extruded strip by thermal stamping, the bottom face of the extruded strip can be cut/removed so as to correspond to the planar shape and depth of the objective shape changing area. For this reason, as described in connection with the effect of the method of forming a molding, the molding having a shape changing area with a good appearance can be easily obtained, and the work of removing the burrs in the molding can be simplified.

The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. The scope of the invention is defined by the claims appended hereto.

## Claims

1. A method of forming a molding with a shape changing area at a predetermined portion of an extruded strip (60) where the shape of a designing side (62) of the predetermined portion changes, said method comprising the steps of :
a bottom face removal step, removing a bottom face (67) of a predetermined portion of said extruded strip (60) to form a bottom face removal portion (68);
a heating/softening step, heating/softening said bottom face removal portion of said extruded strip (60); and
a stamping step, stamping said bottom face removal portion (68) of said extruded strip (60) by said stamping die having said die face (82) corresponding to said shape changing area so as to be shaped in said die shape,
**characterized in that**
in the bottom face removal step the predetermined portion of the extruded strip (60) is removed such that it has a planar shape and a depth corresponding to those of a die face of a stamping die (80) and said shape changing area.

2. A method of forming a molding according to claim 1, wherein in said bottom face removal step, a rotary cutting blade (48A,B) is moved three-dimensionally while it is put on the bottom face (67) of the predetermined portion of the extruded strip (60), whereby said bottom face (67) is removed to have a planar shape and depth corresponding to the shape of the shape changing area.

## Patentansprüche

1. Verfahren zum Formen eines Formteils mit einem Formveränderungsbereich in einem vorgegebenen Teil eines extrudierten Streifens (60), in dem sich die Form einer Gestaltungsseite (62) des vorgegebenen Teils verändert, umfassend die folgenden Schritte:
einen Bodenseitenentfernungsschritt zur Entfernung der Bodenseite (67) eines vorgegebenen Teils des extrudierten Streifens (60), um einen Bodenseitenentfernungsteil (68) auszubilden;
einen Erhitzungs-/Erweichungsschritt zum Erhitzen/Erweichen des Bodenseitenentfernungsteils des extrudierten Streifens (60); und
einen Pressschritt zum Pressen des Bodenseitenentfernungsteils (68) des extrudierten Streifens (60) durch das Presswerkzeug, dessen Oberfläche (82) dem Formveränderungsbereich entspricht, um diesen in der Form des Werkzeugs zu formen,
**dadurch gekennzeichnet,**
**dass** in dem Bodenseitenentfernungsschritt der vorgegebene Teil des extrudierten Streifens (60) so entfernt wird, dass er eine ebene Form und eine Tiefe entsprechend der einer Werkzeugoberfläche eines Presswerkzeugs (80) und des Formveränderungsbereichs aufweist.

2. Verfahren zum Formen eines Formteils gemäß Anspruch 1, wobei in dem Bodenseitenentfernungsschritt eine rotierende, spanabhebende Klinge (48A, B) dreidimensional bewegt wird, während sie auf der Bodenseite (67) des vorgegebenen Teils des extrudierten Streifens (60) aufgesetzt ist, wodurch die Bodenseite (67) so entfernt wird, dass sie eine ebene Form und eine Tiefe entsprechend der Form des Formeränderungsbereichs ausbildet.

## Revendications

1. Procédé de formage d'une pièce moulée ayant une zone de changement de forme au niveau d'une partie prédéterminée d'une pièce extrudée (60), où la forme d'un côté de dessin (62) de la partie prédéterminée varie, ledit procédé comprenant les étapes suivantes :
une étape de dégagement de face inférieure, dégageant une face inférieure (67) d'une partie prédéterminée de ladite bande extrudée (60) pour former une partie de dégagement de face inférieure (68),
une étape de chauffage/ramollissement chauffant/ramollissant ladite partie de dégagement de face inférieure de ladite bande extrudée (60), et
une étape d'estampage, estampant ladite partie de dégagement de face inférieure (68) de ladite bande extrudée (60) par ladite matrice d'estampage ayant ladite face de matrice (82) correspondant à ladite zone de changement de forme de façon à être formée suivant ladite forme de la matrice,
**caractérisé en ce que**
dans l'étape de dégagement de la face inférieure, la partie prédéterminée de la bande extrudée (60) est dégagée de sorte qu'elle présente une forme plane et une profondeur correspondant à celles d'une face de matrice d'une matrice d'estampage (80) et de ladite zone de changement de forme.

2. Procédé de formage d'une pièce moulée selon la revendication 1, dans lequel dans ladite étape de dégagement de la face inférieure, une lame de coupe rotative (48A, 48B) est déplacée dans les trois dimensions tout en étant positionnée sur la face inférieure (67) de la partie prédéterminée de la bande extrudée (60), grâce à quoi ladite face inférieure (67) est dégagée pour présenter une forme plane et une profondeur correspondant à la forme de la zone de changement de forme.
